# EUROPEAN PATENT SPECIFICATION

(11) **EP 4 149 096 B1**
(45) Date of publication and mention of the grant of the patent: **29.01.2025**
(21) Application number: 22808565.0
(22) Date of filing: 27.04.2022
(51) Int. Cl.: H04M 1/02, B23K 31/00, B23K 103/10

(54) **ELECTRONIC DEVICE AND METHOD FOR MANUFACTURING MIDDLE FRAME**
ELEKTRONISCHE VORRICHTUNG UND VERFAHREN ZUR HERSTELLUNG EINES MITTELRAHMENS
DISPOSITIF ÉLECTRONIQUE ET PROCÉDÉ DE FABRICATION DE CADRE INTERMÉDIAIRE

(30) Priority: 29.07.2021 CN 202110869182
(43) Date of publication of application: 15.03.2023
(73) Proprietor: Honor Device Co., Ltd., Shenzhen, Guangdong 518040 (CN)
(72) Inventor: ZHANG, Chunxiao, Shenzhen, Guangdong 518040 (CN)
(74) Representative: Isarpatent
(86) International application number: PCT/CN2022/089551
(87) International publication number: WO 2023/005303

(56) References cited:
- EP-A1- 3 578 290
- CN-A- 102 861 990
- CN-A- 106 862 399
- CN-A- 106 862 399
- CN-A- 108 188 287
- CN-A- 109 151 101
- CN-U- 209 120 231
- CN-U- 209 312 884
- CN-U- 209 312 884
- US-A1- 2021 105 905

## Description

Priority is claimed to Chinese Patent Application No. 202110869182.6, filed with the China National Intellectual Property Administration on July 29, 2021 and entitled "ELECTRONIC DEVICE AND MANUFACTURING METHOD FOR MIDDLE FRAME".

### TECHNICAL FIELD

This disclosure generally relates to the field of communication technologies, and the invention in particular relates to an electronic device and a manufacturing method for a middle frame.

### BACKGROUND

Laser welding generally uses continuous laser beams to connect materials. Laser radiation heats a surface of a work piece. Surface heat diffuses to inside by using heat conduction, and a parameter such as a width, energy, a peak power and a repetition frequency of a laser pulse is controlled, so that the work piece melts to form a specific molten pool. It can be learned that, higher incident laser absorptivity leads to higher heat that diffuses inside the work piece, which better facilitates forming of the molten pool. An absorption amount of the incident laser is related to a smoothness degree of a welding surface, and a smoother surface leads to higher laser reflectivity and lower laser absorptivity, which may directly affect welding quality.

A metal middle frame of a mobile terminal may be obtained in a manner in which a middle plate and a bezel are connected into an integrated structure by using laser welding, where the middle plate is generally die casting aluminum alloy, and the bezel is generally an aluminum profile. Machining usually is performed on welding surfaces of the middle plate and the bezel. An aluminum alloy surface after the machining is smooth. In this case, the laser reflectivity may be greater than 70%. That is, in this case, less than 30% of laser is absorbed by metal of the middle frame.

However, excessively low laser absorptivity affects the welding quality of the laser welding, which causes a problem such as poor welding of a welding spot, an insufficient molten pool depth, a bubble, a crack, and a burst point, which further affects quality of an entire device.

CN 106862399 A discloses a manufacturing method for a mobile terminal metal middle frame and an assembly of the mobile terminal metal middle frame. The method includes the steps that a metal outer frame and a metal inner support which are both independent are prepared, a protruding riveting column is arranged on one side of the metal inner support, and a through hole is formed in the corresponding position of the metal outer frame; the metal outer frame and the metal inner support are combined, and the riveting column is made to enter the through hole; and the metal outer frame and the metal inner support are riveted/welded through the riveting column. Due to the above manner, the anode oxidizing yield of the metal middle frame can be increased, cost is reduced, and productivity is improved.

CN 209312884 U belongs to the technical field of power batteries, and particularly relates to a power battery adapter plate structure, which comprises an adapter plate body used for connecting a top cover pole and a battery tab, the welding position of the adapter plate body is roughened to form a rough surface, and the roughness of the rough surface is.mu m. Compared with the prior art, the rough surface is formed by roughening the welding position of the adapter piece, so that laser energy during welding can be absorbed through the rough surface, the laser welding power is reduced, and the production cost is reduced; meanwhile, welding slag can be avoided, the welding effect is improved, internal short circuit of the battery is prevented, and the safety performance and quality of the battery are improved.

EP 3 578 290 A1 discloses a lap-joined structure including at least one similar metallic material weldable to each other and a different material different in type from the at least one similar metallic material and difficult to be welded to the similar metallic material. The different material is sandwiched and fixed between the similar metallic material. The similar metallic material has at least one exhaust hole or exhaust groove around the weld zone where the similar metallic material is melted and joined together. The exhaust hole or exhaust groove extends through the similar metallic material along its thickness. Thus, the similar metallic material and the different material are fixed and joined together.

### SUMMARY

The object of the present invention is to provide an electronic device and a manufacturing method for a middle frame, to improve welding spot quality by improving laser absorptivity to further solve some problems that affect entire device performance (such as a poor antenna test of the entire device). This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides an electronic device, and the electronic device includes a middle frame. The middle frame includes a bezel and a middle plate. The bezel is disposed around an edge of the middle plate. A plurality of welded posts are disposed on the middle plate. A plurality of through-holes whose positions and sizes are corresponding to those of the plurality of the welded posts are disposed on the bezel, and the plurality of welded posts form a hole shaft fit in a one-to-one correspondence with the plurality of through-holes. Surfaces of the plurality of welded posts and surfaces of the plurality of through-holes are rough surfaces. The bezel and the middle plate are connected by using laser welding in each fit part of the welded post and the through-hole. The rough surface is configured to increase a laser absorption amount in the fit part of the welded post and the through-hole during the laser welding.

In this way, by disposing the rough surface, the laser absorption amount in the fit part of the welded post and the pin-through-hole is effectively increased, and the welding quality is improved to further solve some problems that affect the entire device performance (such as the poor antenna test of the entire device). In addition, by disposing the plurality of welded posts and through-holes that are in a one-to-one correspondence with the welded posts, the bezel and the middle plate are located in a manner that the welded post forms a hole shaft fit in a one-to-one correspondence with the through-hole during welding, so as to determine a welding area and a welding surface and ensure that the welding surface is a rough surface, thereby increasing a laser absorption amount of the welding surface.

Each of the plurality of welded post is a rounded rectangular welded post. Each of the plurality of through-holes is a rounded rectangular through-hole.

In this way, by disposing the rounded rectangular welded post to improve strength of the welded post, a fracture problem is not prone to occur at a root of the welded post during the welding.

The plurality of welded posts include at least one first welded post and at least one second welded post, the first welded post is a circular welded post, and the second welded post is a rounded rectangular welded post. The plurality of through-holes include at least one first through-hole and at least one second through-hole, the first through-hole is a circular through-hole, and the second through-hole is a rounded rectangular through-hole. The at least one first welded post forms a hole shaft fit in a one-to-one correspondence with the at least one first through-hole, and the at least one second welded post forms a hole shaft fit in a one-to-one correspondence with the at least one second through-hole.

In an implementation, the middle plate is a rectangular middle plate, and each side line of the middle plate is disposed with the at least one first welded post and/or the at least one second welded post.

In this way, by disposing the at least one first welded post and the at least one second welded post, strength of the welded post is improved, so that a fracture problem is not prone to occur at a root of the welded post during the welding. Compared with a technical solution that only the second welded post is disposed, a processing precision requirement can be alternatively reduced in this implementation, which facilitates batch production.

The middle frame further includes an exhaust groove. The exhaust groove is disposed around a root of the at least one first welded post and/or the at least one second welded post, and the exhaust groove is configured to discharge gas that is generated during the laser welding and increase a weld pool depth during the laser welding.

In this way, the exhaust groove is added to a root of the die casting aluminum alloy welded post, which helps to discharge gas and increase a weld pool depth.

The rough surface of the welded post is obtained by film processing, and surface glossiness of the welded post is less than 20 Gu.

A surface roughness value of the through-hole is from Ra3.2 to Ra5.

In this way, by disposing the rough surface, the surface roughness value of the through-hole reaches Ra3.2 to Ra5, and the surface glossiness of the welded post is less than 20 Gu, thereby effectively improving welding laser absorptivity, and further improving welding quality.

According to a second aspect according to the invention, the invention also provides a manufacturing method for a middle frame, the middle frame includes a middle plate and a bezel, and the method includes: obtaining the middle plate by using a die casting molding process, disposing a plurality of welded posts on the middle plate, and performing film processing on the middle plate so that at least surfaces of the plurality of welded posts are rough surfaces; performing machining on an aluminum profile to obtain the bezel, and disposing a plurality of through-holes whose positions and sizes are corresponding to those of the plurality of welded posts on the bezel; performing surface treatment on the bezel so that at least surfaces of the plurality of through-holes are rough surfaces; mounting the bezel on the middle plate so that the plurality of welded posts form a hole shaft fit in a one-to-one correspondence with the plurality of through-holes; and connecting the bezel and the middle plate into an integrated structure by using laser welding in each fit part of the welded post and the through-hole.

In this way, the surface glossiness and roughness of the bezel are reduced by chemical sanding, and the surface glossiness and roughness of the middle plate are reduced by film processing. By disposing the rough surface, a surface roughness value of the bezel reaches Ra3.2 to Ra5, and surface glossiness of the middle plate is less than 20 Gu, thereby effectively improving welding laser absorptivity, and further improving welding quality. The laser absorptivity reaches more than 60%, the welding process is more stable, and a larger depth of fusion is easily obtained at lower welding power.

The performing film processing on the middle plate so that at least surfaces of the plurality of welded posts are rough surfaces includes: performing film processing on the middle plate, so that at least surfaces of the plurality of welded posts meet that surface glossiness is less than 20 Gu.

The performing surface treatment on the bezel so that at least surfaces of the plurality of through-holes are rough surfaces includes: performing chemical sanding on the bezel so that at least surface roughness values of the through-hole surfaces are from Ra3.2 to Ra5.

In this way, by disposing the rough surface, the surface roughness value of the through-hole reaches Ra3.2 to Ra5, and the surface glossiness of the welded post is less than 20 Gu, thereby effectively improving the welding laser absorptivity, and further improving the welding quality.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a current common schematic diagram of a structure of a middle frame;
FIG. 2a is a schematic diagram of a split structure of a middle frame of a spliced structure;
FIG. 2b is a schematic sectional view of an A-A part in a welding area of a middle frame;
FIG. 3 is a schematic diagram of welding laser absorption when a welding surface of the middle frame shown in FIG. 2a is a machining surface;
FIG. 4a is a schematic diagram of a structure of a first embodiment of a middle frame according to this application;
FIG. 4b is a schematic splitting diagram of a middle frame shown in FIG. 4a;
FIG. 5 is a schematic diagram of an enlarged part of a welded post when a middle plate in a middle frame is die casting aluminum according to this application;
FIG. 6 is a schematic diagram of an enlarged part of a middle frame according to this application;
FIG. 7a is a schematic diagram of a structure of an embodiment of a middle plate in a middle frame according to this application;
FIG. 7b is a schematic sectional view of a B-B part of the middle plate shown in FIG. 7a;
FIG. 8a is a flowchart of a pre-order process of a bezel in a manufacturing method for a middle frame according to this application;
FIG. 8b is a flowchart of a pre-order process of a middle plate in a manufacturing method for a middle frame according to this application;
FIG. 8c is a flowchart of a process of a manufacturing method for a middle frame according to this application; and
FIG. 9 is a flowchart of welding laser absorption in a manufacturing method for a middle frame according to this application.

### DESCRIPTION OF EMBODIMENTS

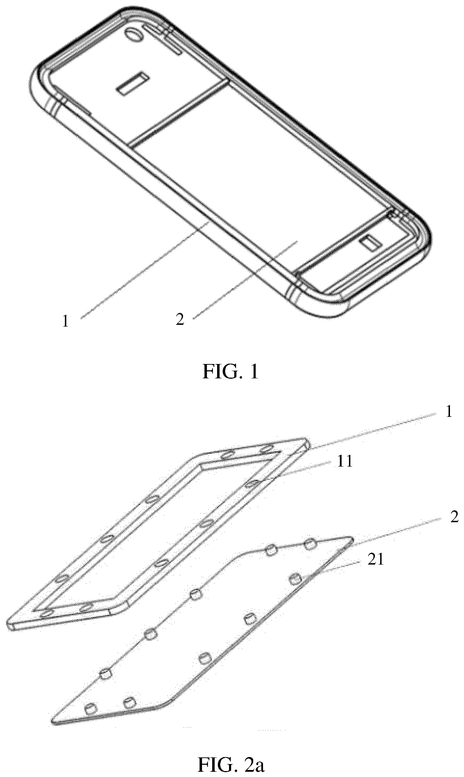

A terminal device in a form such as a mobile phone or a tablet computer generally includes a middle frame structure. FIG. 1 is a current common schematic diagram of a structure of a middle frame. As shown in FIG. 1, the middle frame may generally consist of a middle plate 2 and a bezel 1 that is disposed around an edge of the middle plate. The middle frame may be considered as a support structure of the terminal device. Components such as a mainboard, a camera, a loudspeaker, a battery, and a receiver that are inside the terminal device may be fixed to the middle plate. A joint between the middle plate and the bezel of the middle frame may further be formed into a shape that matches a rear cover edge or a display edge of the terminal device by injection molding, so that a rear cover or a display of the terminal device can cover and be fastened on both sides of the middle frame.

The middle frame of the terminal device generally includes a plastic middle frame and a metal middle frame. The metal middle frame may be an integrated structure, and may be obtained by performing a series of technology processes on a metal semifinished part. For example, the metal semifinished part is first processed by using a stamping process or forging process to mold an integrated bezel and middle plate structure. Then, an injection molding position structure at the joint between the middle plate and the bezel is obtained by performing machining, and then a plastic material is injected into an injection molding position to obtain the shape that matches the rear cover edge or the display edge of the terminal device. Finally, machining is performed to meet a size requirement and perform surface treatment. In the foregoing processes, machining takes a long time and requires high costs, which seriously affects a development cycle and market competitiveness of an entire device.

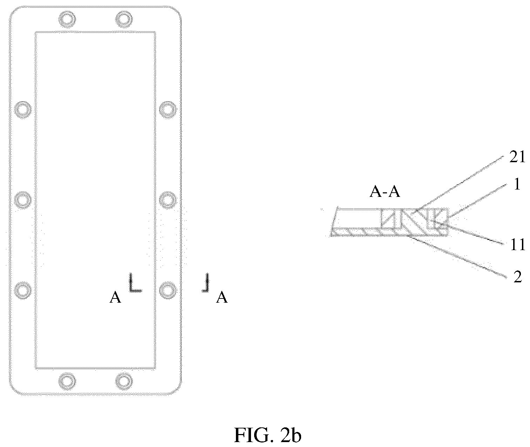

Therefore, some metal middle frames are changed from the original integrated structure to a spliced structure to shorten a product development cycle and reduce development costs. FIG. 2a is a schematic diagram of a split structure of a middle frame of a spliced structure. As shown in FIG. 2a, in the middle frame of the spliced structure, the bezel 1 and the middle plate 2 are mutually independent structures. When the middle frame of the spliced structure is manufactured, the bezel 1 and the middle plate 2 are first separately manufactured, and then the bezel 1 and the middle plate 2 are connected together by using laser welding. Generally, the bezel 1 may be a molded aluminum material, and the middle plate 2 may be a die casting aluminum alloy material. FIG. 2b is a schematic sectional view of an A-A part in a welding area of a middle frame. As shown in FIG. 2, a welded post 21 is disposed on the middle plate 2, and a through-hole 11 whose position and size are corresponding to those of the welded post 21 is disposed on the bezel 1. During welding, the bezel 1 may be first placed on the middle plate 2, so that the welded post 21 of the middle plate 2 is inserted into the through-hole 11 of the bezel 1 to locate the bezel 1 and the middle plate 2, and then the welded post 21 and the through-hole 11 are welded together by using laser.

It may be understood that, generally, a plurality of welded posts 21 are continuously disposed on the middle plate 2 to ensure welding strength, and a plurality of through-holes 11 corresponding to the "welded posts 21" are disposed on the bezel 1, so as to insert the welded post 21 into the corresponding through-hole 11 during laser welding.

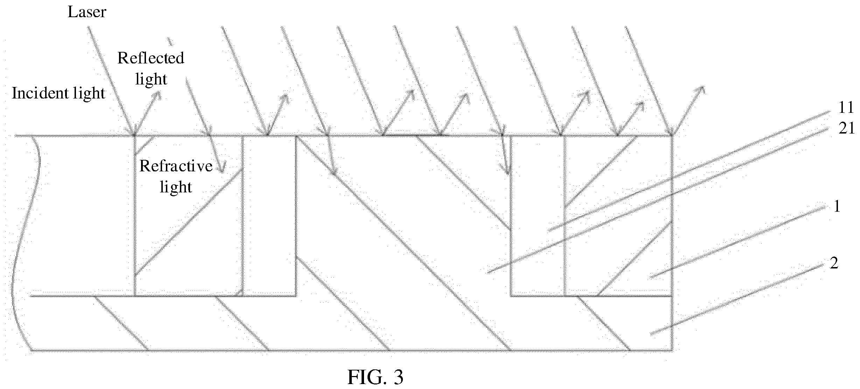

FIG. 3 is a schematic diagram of welding laser absorption when a welding surface of the middle frame shown in FIG. 2a is a machining surface. As shown in FIG. 3, during welding, laser is used as incident light, and is incident on a welding area formed by the welded post 21 and the through-hole 11. A part of incident laser is reflected, and a remaining part of the incident laser is absorbed by metal of the middle frame. The absorbed laser is used to heat a surface of the welding area (that is, the welding surface), so that the welded post 21 is melted, and a specific molten pool is formed to implement welding of the bezel 1 and the middle plate 2.

An absorption amount of the incident laser is related to a smoothness degree of the welding surface, and a smoother surface leads to higher laser reflectivity. For example, when the welding surface uses a manner of machining, the laser reflectivity may be greater than 70%. That is, in this case, only less than 30% of the laser is absorbed by the metal of the middle frame, and excessively low laser absorptivity may affect welding quality of the laser welding, which causes a problem such as poor welding of a welding spot/an insufficient molten pool depth/a bubble/a crack/a burst point.

To improve the laser absorptivity of the welding surface, so as to further improve welding quality of a welding joint between the middle plate and the bezel, an embodiment of this application provides a middle frame.

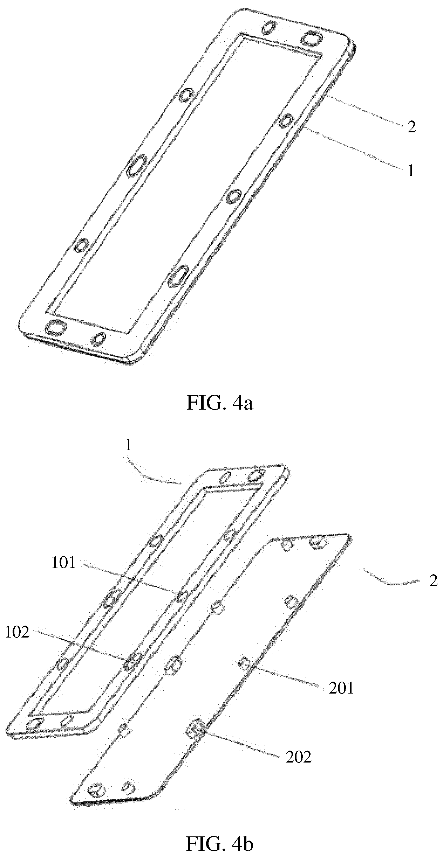

FIG. 4a is a schematic diagram of a structure of a first embodiment of a middle frame according to this application. As shown in FIG. 4a, the middle frame consists of a middle plate 2 and a bezel 1 that is disposed around an edge of the middle plate.

FIG. 4b is a schematic diagram of a split middle frame shown in FIG. 4a. As shown in FIG. 4b, a plurality of welded posts are disposed on the middle plate 2. A plurality of through-holes are disposed on the bezel 1. The plurality of through-holes correspond to the plurality of welded posts in terms of position and size. During laser welding of the bezel 1 and the middle plate 2, the bezel 1 may be first disposed on the middle plate 2, so that the plurality of welded posts of the middle plate 2 are inserted into the plurality of through-holes of the bezel 1 in a one-to-one correspondence, and the plurality of welded posts form a hole shaft fit in a one-to-one correspondence with the plurality of through-holes to locate the bezel 1 and the middle plate 2. Then, each welded post and through-hole that are in a hole shaft fit are welded together by using laser, thereby further implementing welding connection of the bezel 1 and the middle plate 2.

To improve laser absorptivity of a welding surface, surfaces of the plurality of welded posts and surfaces of the plurality of through-holes are rough surfaces. The bezel and the middle plate are connected by using laser welding in each fit part of the welded post and the through-hole, and the rough surface is configured to increase a laser absorption amount of the fit part of the welded post and the through-hole during the laser welding. Because the rough surface is uneven, laser reflection may occur a plurality of times on the rough surface, and the rough surface repeatedly absorbs the laser reflected a plurality of times, so that the laser absorption amount is increased.

A surface roughness value of the bezel 1 reaches Ra3.2 to Ra5, and surface glossiness of the middle plate 2 is less than 20 Gu. It may be understood that surface roughness of the bezel 1 may be increased by removing the material, for example, chemical sanding. A glossiness requirement of the middle plate 2 may be ensured by adding a dense film layer, for example, film processing. A specific processing form is not limited in this application. In addition, chemical sanding may be performed on the whole bezel 1, or chemical sanding may be performed on only a part of the welding surface, which is also not limited in this application. Likewise, the film processing may be performed on the whole middle plate 2, or the film processing may be performed on only a part of the welding surface, which is also not limited in this application.

In this embodiment of this application, shapes and/or sizes of the plurality of welded posts may be the same or different. For example, when the shapes and/or sizes of the plurality of welded posts are the same, each of the plurality of welded posts may be a circular welded post, a rounded rectangular welded post, or a welded post of another shape. Correspondingly, each of the plurality of through-holes may be a circular through-hole, a rounded rectangular through-hole, or a through-hole of another shape. When the shapes and/or sizes of the plurality of welded posts are the same, this can decrease the processing difficulty, reduce the precision requirement for a semifinished part, and facilitate batch production. For another example, when the shapes and/or sizes of the plurality of welded posts are different, some of the welded posts may be circular welded posts, and other welded posts may be rounded rectangular welded posts. Correspondingly, some of the through-holes may be circular through-holes, and other through-holes may be rounded rectangular through-holes. When the circular welded post is disposed, the bezel and the middle plate are connected by using a small cylinder, which is weak in strength, and a fracture is prone to occur at a root of the welded post. When the rounded rectangular welded post is disposed, strength of a connection position of the bezel and the middle plate is high, and a fracture is not prone to occur at the root of the welded post. If the circular welded post and the rounded rectangular welded post are disposed at the same time, the rounded rectangular welded post ensures welding strength, and a quantity of the circular welded posts is properly disposed to reduce the precision requirement for the semifinished part and facilitate batch production.

Further referring to FIG. 4b, in an implementation, at least one first welded post 201 and at least one second welded post 202 are disposed on the middle plate 2. A first through-hole 101 and a second through-hole 102 are disposed on the bezel 1. The first welded post 201 is a circular welded post, and the second welded post 202 is a rounded rectangular welded post. The first through-hole 101 is a circular through-hole, and the second through-hole 102 is a rounded rectangular through-hole. The first through-hole 101 corresponds to the first welded post 201 in terms of position and size. The second through-hole 102 corresponds the second welded post 202 in terms of position and size. The at least one first welded post 201 forms a hole shaft fit in a one-to-one correspondence with at least one first through-hole 101, and the at least one second welded post 202 forms a hole shaft fit in a one-to-one correspondence with at least one second through-hole 102.

It may be understood that, in an electronic device such as a mobile phone or a tablet, a form of a device is a rectangle. Therefore, the middle frame is used as a structural component, and to adapt to the form of the device, both the bezel 1 and the middle plate 2 of the middle frame may be set as rectangles. When the middle plate 2 and the bezel 1 are rectangles, a long side of a round rectangle of the second welded post 202 and a long side of a round rectangle of the second through-hole 102 are preferably parallel to a side line of an adjacent middle plate. In addition, at least one second welded post 202 is preferably correspondingly disposed on each side line of the middle plate, and correspondingly, a second through-hole 102 whose size and position are corresponding to those of the second welded post 202 is disposed on the bezel 1.

When the bezel and the middle plate are welded by laser, the bezel 1 may be first placed on the middle plate 2, so that the first welded post 201 of the middle plate 2 is inserted into the first through-hole 101 of the bezel 1, and the second welded post 202 of the middle plate 2 is inserted into the second through-hole 102 of the bezel 1 to locate the bezel 1 and the middle plate 2. Then, the first welded post 201 and the first through-hole 101 are welded together by using laser, and the second welded post 202 and the second through-hole 102 are welded together by using laser, thereby implementing the welding connection of the bezel 1 and the middle plate.

In an implementation, a plurality of first welded posts 201 and a plurality of second welded posts 202 are distributed at intervals on an edge of the middle plate 2 around the middle plate 2, the plurality of first welded posts 201 and the plurality of second welded posts 202 are preferably alternately distributed, and there is a specific distance between two adjacent welded posts. A rectangular middle plate 2 is used as an example. One or more welded posts are distributed on each side line of a surface of the middle plate 2, and at least one first welded post 201 and at least one second welded post 202 are preferably disposed on each side of the surface of the middle plate 2. For example, in the structure shown in FIG. 4b, one first welded post and one second welded post are distributed on each short side of the middle plate 2, and two first welded posts and one second welded post are distributed on each long side. These two first welded posts may be adjacent, or may not be adjacent. A plurality of first through-holes 101 whose quantity, positions, and sizes are corresponding to those of a plurality of first welded posts 201 are disposed on the bezel 1, and a plurality of second through-holes 102 whose quantity, positions, and sizes are corresponding to those of a plurality of second welded posts 202 are disposed on the bezel 1. It may be understood that, a larger quantity of welded posts leads to higher welding strength, but a processing precision requirement is also improved. Therefore, the quantity of welded posts should be kept within a proper value range. This application sets no specific limitation on the quantity of welded posts.

In an implementation, a center distance between the first welded post 201 and the second welded post 202 that are disposed adjacent to each other is a first preset distance. It may be understood that the first preset distance may be determined based on a size of the middle frame, and a larger size of the middle frame leads to a larger first preset distance. However, a person skilled in the art considers the welding strength, that is, a smaller first preset distance leads to higher welding strength, and therefore, the first preset distance does not increase without limitation. A specific value of the first preset distance is not limited in this application.

In an implementation, a thickness of the bezel 1 is less than a height of the first welded post 201, and a height difference is preferably from 0.3 mm to 0.5 mm. The thickness of the bezel 1 is less than a height of the second welded post 202, and a height difference is preferably from 0.3 mm to 0.5 mm.

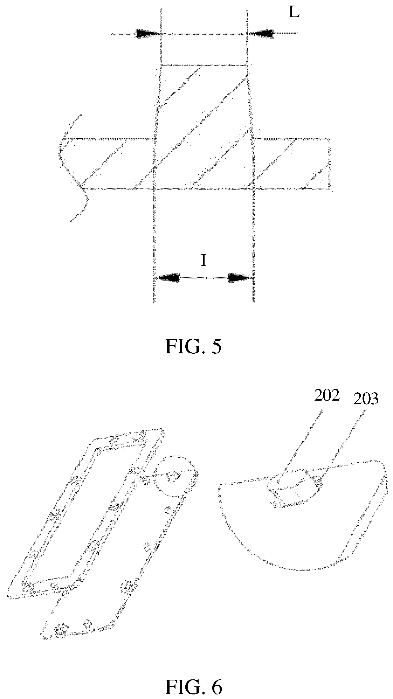

In an implementation, the middle plate is die casting aluminum. FIG. 5 is a schematic diagram of an enlarged part of a welded post when a middle plate in a middle frame is die casting aluminum according to this application. As shown in FIG. 5, both the first welded post 201 and the second welded post 202 are posts with a large top and a small root, that is, a size L of a top of the welded post is less than a size I of a root of the welded post. An oblique angle of a bus is limited by a die casting molding process, which is not limited in this application.

In an implementation, a gap between the first through-hole 101 and the first welded post 201 is preferably from 0.05 mm to 0.08 mm at a root of the first welded post 201. A gap between the first through-hole 101 and the first welded post 201 is preferably from 0.1 mm to 0.2 mm on a top of the first welded post 201. A gap between the second through-hole 102 and the second welded post 202 is preferably from 0.05 mm to 0.08 mm at a root of the second welded post 202. A gap between the second through-hole 102 and the second welded post 202 is preferably from 0.1 mm to 0.2 mm on a top of the second welded post 202.

In an implementation, FIG. 6 is a schematic diagram of an enlarged part of a middle frame according to this application. As shown in FIG. 6, an exhaust groove 203 is disposed around the root of the second welded post 202.

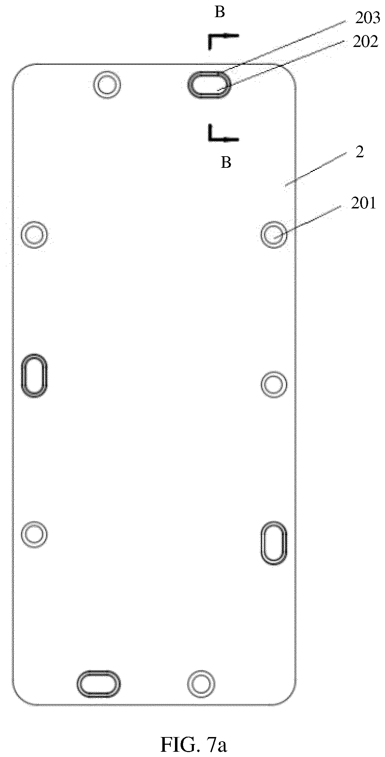

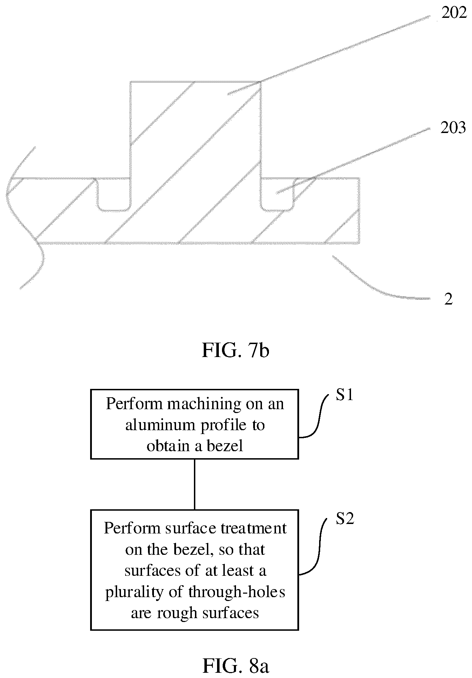

FIG. 7a is a schematic diagram of a structure of an embodiment of a middle plate in a middle frame according to this application. As shown in FIG. 7a, the second welded post 202 is a rounded rectangular welded post, and the exhaust groove 203 is an annular groove, and is disposed around the second welded post 202 that is a rounded rectangular welded post. FIG. 7b is a schematic sectional view of a B-B part of the middle plate shown in FIG. 7a. As shown in FIG. 7b, the exhaust groove 203 has a specific depth, and the exhaust groove 203 is configured to discharge gas generated during laser welding and increase a weld pool depth during the laser welding.

In an implementation, an exhaust groove with a specific depth may alternatively be disposed around the root of the first welded post 201. The exhaust groove is configured to discharge gas generated during the laser welding and increase the weld pool depth during the laser welding.

In the middle frame provided in this application, a surface roughness value of the bezel 1 reaches Ra3.2 to Ra5, and surface glossiness of the middle plate 2 is less than 20 Gu, thereby effectively improving welding laser absorptivity, and improving welding quality. In an implementation, the rounded rectangular welded post is disposed on the middle plate of the middle frame provided in this application, which can improve laser absorptivity of the welding surface, thereby further improving welding quality at a welding joint between the middle plate and the bezel. In this way, strength of the rounded rectangular welded post is high, so that during welding, a fracture problem is not prone to occur at the root of the welded post. The exhaust groove is added to the root of the welded post, which helps to discharge gas and increase the weld pool depth, thereby increasing effective welding. In this application, welding spot quality is improved to further solve some problems that affect entire device performance (such as a poor antenna test of the entire device).

With reference to the accompanying drawings, the following describes a manufacturing method for a middle frame shown in the foregoing embodiment provided in this application.

FIG. 8a is a flowchart of a pre-order process of a bezel in a manufacturing method for a middle frame according to this application. As shown in FIG. 8a, the manufacturing method for a middle frame includes the following steps S1 and S2.

S1: Perform machining on an aluminum profile to obtain a bezel.

In an implementation, the bezel is a rectangular annular bezel, a plurality of through-holes are disposed on the bezel, and shapes and/or sizes of the plurality of through-holes may be the same or different. For example, when the shapes and/or the sizes of the plurality of through-holes are the same, each of the plurality of through-holes may be a circular through-hole, a rounded rectangular through-hole, or a through-hole of another shape. For another example, when the shapes and/or sizes of the plurality of through-holes are different, some of the through-holes may be circular through-holes, and other through-holes may be rounded rectangular through-holes.

In an implementation, a first through-hole and a second through-hole are disposed on the bezel, the first through-hole is a circular through-hole, and the second through-hole is a rounded rectangular through-hole.

In an implementation, a plurality of first through-holes and a plurality of second through-holes are distributed at intervals on an edge of the bezel around the bezel, the plurality of first through-holes and the plurality of second through-holes are preferably alternately distributed, and there is a specific distance between two adjacent through-holes. A rectangular bezel is used as an example. One or more through-holes are distributed on each side line of a surface of the bezel, and at least one first through-hole and at least one second through-hole are preferably disposed on each side of the surface of the bezel. For example, in the structure shown in FIG. 4b, one first through-hole and one second through-hole are distributed on each short side of the bezel, and two first through-holes and one second through-hole are distributed on each long side. The two first through-holes may be adjacent, or may not be adjacent.

S2: Perform surface treatment on the bezel, so that at least surfaces of the plurality of through-holes are rough surfaces.

Chemical sanding is performed on the bezel obtained in S1, so that a surface roughness value of a product reaches Ra3.2 to Ra5.

In an implementation, it may be understood that the surface of the bezel after the chemical sanding is in a matt state.

In an implementation, the chemical sanding means that the product is immersed in an acid solution that is supplemented by an organic additive, and is corroded at a high temperature.

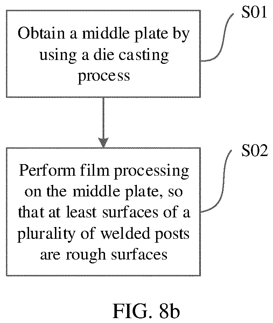

FIG. 8b is a flowchart of a pre-order process of a middle plate in a manufacturing method for a middle frame according to this application. As shown in FIG. 8b, a process flow of the middle plate includes the following steps S01 and S02.

S01: Obtain a middle plate by using a die casting molding process.

A plurality of welded posts are disposed on the middle plate, and shapes and/or sizes of the plurality of welded posts may be the same or different. For example, when the shapes and/or sizes of the plurality of welded posts are the same, each of the plurality of welded posts may be a circular welded post, a rounded rectangular welded post, or a welded post of another shape. For another example, when the shapes and/or sizes of the plurality of welded posts are different, some of the welded posts may be circular welded posts, and other welded posts may be rounded rectangular welded posts. It may be understood that the plurality of through-holes disposed on the bezel in S1 correspond to a quantity, positions, and sizes of the plurality of welded posts disposed in this step S01.

In an implementation, a first welded post and a second welded post are disposed on the middle plate, the first welded post is a circular welded post, and the second welded post is a rounded rectangular welded post. It may be understood that, the first through-hole on the bezel in S1 corresponds to the first welded post disposed in this step S01 in terms of position and size. The second through-hole on the bezel in S1 corresponds to the second welded post disposed in this step S01 in terms of position and size.

In an implementation, a plurality of first welded posts and a plurality of second welded posts are distributed at intervals on an edge of the middle plate around the middle plate, the plurality of first welded posts and the plurality of second welded posts are preferably alternately distributed, and there is a specific distance between two adjacent welded posts. A rectangular middle plate is used as an example. One or more welded posts are distributed on each side line of a surface of the middle plate, and at least one first welded post and at least one second welded post are preferably disposed on each side of the surface of the middle plate. For example, in the structure shown in FIG. 4b, one first welded post and one second welded post are distributed on each short side of the middle plate, and two first welded posts and one second welded post are distributed on each long side. The two first welded posts may be adjacent, or may not be adjacent.

S02: Perform film processing on the middle plate so that at least surfaces of the plurality of welded posts are rough surfaces;

In an implementation, the film processing is performed on the semifinished part obtained in S01, so that the surface glossiness of the semifinished part is less than 20 Gu.

It may be understood that the surface of the middle plate after the film processing is performed is in a matt state, and lower mirror reflectivity leads to lower glossiness.

In an implementation, the film processing means that phosphate reacts with a middle plate semifinished part of die casting aluminum, so that a dense film layer is generated and is closely attached to a surface of metal.

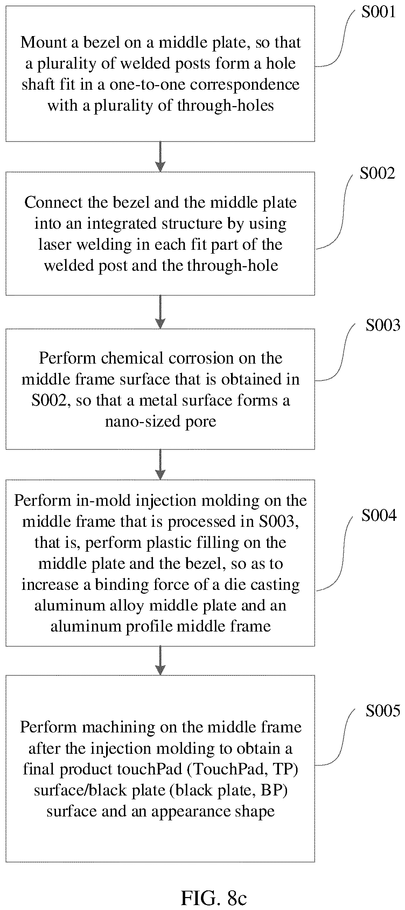

FIG. 8c is a flowchart of a process of a manufacturing method for a middle frame according to this application. As shown in FIG. 8b, the manufacturing method for a middle frame includes the following steps S001 to S004.

S001: Mount the bezel on the middle plate so that the plurality of welded posts form a hole shaft fit in a one-to-one correspondence with the plurality of through-holes.

S002: Connect the bezel and the middle plate into an integrated structure by using laser welding in each fit part of the welded post and the through-hole.

In an implementation, a welding manner is laser welding, the bezel is first placed on the middle plate, so that the first welded post of the middle plate is inserted into the first through-hole of the bezel, and the second welded post of the middle plate is inserted into the second through-hole of the bezel to locate the bezel and the middle plate. Then, the first welded post and the first through-hole are welded together by using laser, and the second welded post and the second through-hole are welded together by using laser, so that the bezel and the middle plate are welded together by using laser.

In an implementation, a distance between a weld joint and a side wall is greater than 0.4 mm, so as to avoid a problem that a laser path is shielded because of a small size.

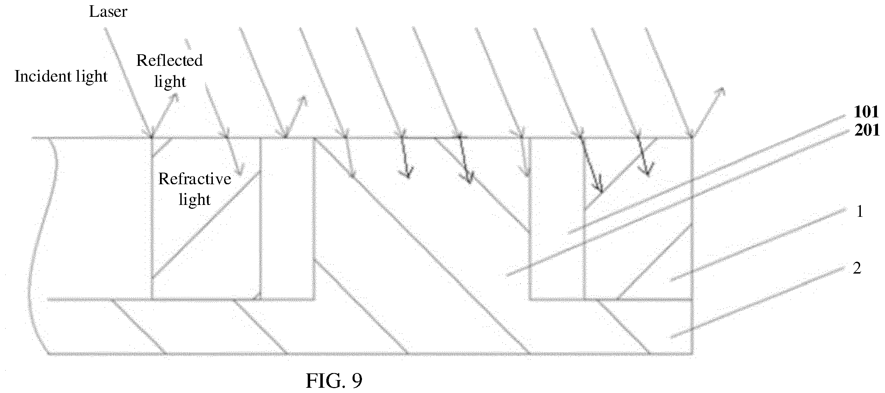

FIG. 9 is a flowchart of welding laser absorption in a manufacturing method for a middle frame according to this application. As shown in FIG. 9, surface glossiness and surface roughness of the bezel are reduced by using chemical sanding, and surface glossiness and surface roughness of the middle plate are reduced by using film processing, so that laser absorptivity reaches more than 60%, a welding process is more stable, and a larger depth of fusion is easily obtained at lower welding power.

In an implementation, an exhaust groove is added to a root of a die casting aluminum alloy welded post, that is, the exhaust groove is disposed around a root of the second welded post, and the exhaust groove has a specific depth, which helps to discharge gas and increase a weld pool depth.

S003: Perform chemical corrosion on the middle frame surface that is obtained in S002, so that the metal surface forms a nano-sized pore.

In an implementation, a nanopore size is preferably from 40 nm to 60 nm.

S004: Perform in-mold injection molding on the middle frame that is processed in S003, that is, perform plastic filling on the middle plate and the bezel, so as to increase a binding force of the die casting aluminum alloy middle plate and the aluminum profile middle frame.

It may be understood that, machining may be performed before the injection molding, so that the outer length and width of the product are ensured to be precise before the injection molding, thereby further ensuring stability of a fit gap between the outer length and width of the product and an injection mold slider.

In addition, an injection molding locating hole and the product appearance need to be clamped in a same position and processed to ensure the stability of the fit gap between the outer length and width of the product and the injection mold slider.

It may be understood that, in an implementation, the following steps may be further included: perform grinding and polishing on the product surface by using a polishing wheel; and obtain required product surface hardness, wear resistance, corrosion resistance, and product appearance effect by anodizing.

S005: Perform machining on the middle frame after the injection molding to obtain a final product touchpad (touchpad, TP) surface/black plate (black plate, BP) surface and an appearance shape.

The middle frame is configured to fix a rear cover, a screen, and an internal component, and a holder and a battery are provided between the middle frame and the rear cover. Specifically, one side of the middle frame is assembled with the screen, which has a function of being an interlayer between the screen and an electronic part. In addition, the middle frame also provides a more reliable and secure mounting foundation for each electronic part. The other side of the middle frame is assembled with the rear cover to protect a mobile terminal from impact.

In the manufacturing method for a middle frame provided by this application, the surface glossiness and roughness of the bezel are reduced by using chemical sanding, and the surface glossiness and roughness of the middle plate are reduced by using film processing, so that the laser absorptivity reaches more than 60%, the welding process is more stable, and a larger depth of fusion is easily obtained at lower welding power. In an implementation, the exhaust groove is added to the root of the die casting aluminum alloy welded post, which helps to discharge gas and increase the weld pool depth. In this application, welding spot quality is improved to further solve some problems that affect entire device performance (such as a poor antenna test of the entire device).

An embodiment of this application further provide an electronic device, including the middle frame provided in the foregoing embodiment. The middle frame may be obtained by using the manufacturing method for a middle frame provided in the embodiment of this application. The terminal device may include, for example, a mobile terminal, a tablet computer, a personal computer, a workstation device, a large screen device (for example, a smart screen and an intelligent television), a handheld game console, a home game console, a virtual reality device, an augmented reality device, a mixed reality device, an intelligent vehicle terminal, a self-driving vehicle, customer-premises equipment (customer-premises equipment, CPE), and the like.

## Claims

1. An electronic device, comprising a middle frame, wherein the middle frame comprises a bezel (1) and a middle plate (2);
the bezel (1) is disposed around an edge of the middle plate (2);
a plurality of welded posts (21) are disposed on the middle plate (2);
a plurality of through-holes (11) whose positions and sizes are corresponding to those of the plurality of welded posts (21) are disposed on the bezel (1), and the plurality of welded posts (21) form a hole shaft fit in a one-to-one correspondence with the plurality of through-holes (11);
surfaces of the plurality of welded posts (21) and surfaces of the plurality of through-holes (11) are rough surfaces, wherein the rough surface of the welded post (21) is obtained by film processing, and the welded post (21) meets that surface glossiness is less than 20 Gu, and wherein a surface roughness value of the through-hole (11) is from Ra3.2 to Ra5 by chemical sanding; and
the bezel (1) and the middle plate (2) are connected by using laser welding in each fit part of the welded post (21) and the through-hole (11); wherein
the plurality of welded posts (21) comprise at least one first welded post (201) and/or at least one second welded post (202), the first welded post (210) is a circular welded post, and the second welded post (202) is a rounded rectangular welded post;
the plurality of the through-holes (11) comprise at least one first through-hole (101) and/or at least one second through-hole (102), the first through-hole (101) is a circular through-hole (101), and the second through-hole (102) is a rounded rectangular through-hole (102); and
the at least one first welded post (201) forms a hole shaft fit in a one-to-one correspondence with the at least one first through-hole (101), and/or the at least one second welded post (201) forms a hole shaft fit in a one-to-one correspondence with the at least one second through-hole (202); and
further comprising an exhaust groove (203), wherein the exhaust groove (203) is disposed in the middle plate (2) around a bottom of the at least one first welded post (201) and/or the at least one second welded post (202), the exhaust groove having a specific depth to discharge gas and increase a weld pool depth.

2. The electronic device according to claim 1, wherein
each of the plurality of welded posts (21) is a rounded rectangular welded post (21); and
each of the plurality of through-holes (11) is a rounded rectangular through-hole (11).

3. The electronic device according to claim 1 or 2, wherein the middle plate (2) is a rectangular middle plate (2), and the at least one first welded post (201) and/or the at least one second welded post (202) are/is disposed on each side line of the middle plate (2).

4. A manufacturing method for a middle frame, wherein the middle frame comprises a middle plate (2) and a bezel (1), and the method comprises:
obtaining (S01) the middle plate (2) by using a die casting molding process, and disposing a plurality of welded posts (21) on the middle plate (2), wherein
the plurality of welded posts (21) comprise at least one first welded post (201) and/or at least one second welded post (202), the first welded post (210) is a circular welded post, and the second welded post (202) is a rounded rectangular welded post;
the plurality of the through-holes (11) comprise at least one first through-hole (101) and/or at least one second through-hole (102), the first through-hole (101) is a circular through-hole (101), and the second through-hole (102) is a rounded rectangular through-hole (102); and
the at least one first welded post (201) forms a hole shaft fit in a one-to-one correspondence with the at least one first through-hole (101), and/or the at least one second welded post (201) forms a hole shaft fit in a one-to-one correspondence with the at least one second through-hole (202);
forming an exhaust groove (203) in the middle plate (2) around a bottom of the at least one first welded post (201) and/or the at least one second welded post (202), the exhaust groove having a specific depth to discharge gas and increase a weld pool depth;
performing (S02) film processing on the middle plate (2) so that at least surfaces of the plurality of welded posts (21) are rough surfaces by performing film processing on the middle plate (2), so that at least surfaces of the plurality of welded posts (21) meet that surface glossiness is less than 20 Gu;
performing (S1) machining on an aluminum profile to obtain the bezel (1), and disposing a plurality of through-holes (11) whose positions and sizes are corresponding to those of the plurality of welded posts (21) on the bezel (1);
performing (S2) surface treatment on the bezel (1) so that at least surfaces of the plurality of through-holes (11) are rough surfaces by performing (S2) chemical sanding on the bezel (1) so that at least surface roughness values of the through-hole surfaces are from Ra3.2 to Ra5;
mounting (S001) the bezel (1) on the middle plate (2) so that the plurality of welded posts (21) form a hole shaft fit in a one-to-one correspondence with the plurality of through-holes (11); and
connecting (S002) the bezel (1) and the middle plate (2) into an integrated structure by using laser welding in each fit part of the welded post (21) and the through-hole (11).

## Patentansprüche

1. Elektronische Vorrichtung, umfassend einen Mittelrahmen, wobei der Mittelrahmen eine Einfassung (1) und eine Mittelplatte (2) umfasst;
die Einfassung (1) um eine Kante der Mittelplatte (2) herum angeordnet ist;
eine Vielzahl von geschweißten Stiften (21) auf der Mittelplatte (2) angeordnet ist;
eine Vielzahl von Durchgangslöchern (11), deren Positionen und Größen denen der Vielzahl von geschweißten Stiften (21) entsprechen, auf der Einfassung (1) angeordnet ist, und die Vielzahl von geschweißten Stiften (21) eine Lochschaftpassung in einer Eins-zu-eins-Entsprechung mit der Vielzahl von Durchgangslöchern (11) ausbildet;
Oberflächen der Vielzahl von geschweißten Stiften (21) und Oberflächen der Vielzahl von Durchgangslöchern (11) raue Oberflächen sind, wobei die raue Oberfläche des geschweißten Stiftes (21) durch Filmverarbeitung erhalten wird und der geschweißte Stift (21) diesen Oberflächenglanz erreicht, der weniger als 20 Gu beträgt, und wobei ein Oberflächenrauheitswert des Durchgangslochs (11) von Ra3,2 bis Ra5 nach einem chemischen Schleifen beträgt; und
die Einfassung (1) und die Mittelplatte (2) durch Laserschweißen in jedem Passteil des geschweißten Stiftes (21) und des Durchgangslochs (11) verbunden werden; wobei
die Vielzahl von geschweißten Stiften (21) mindestens einen ersten geschweißten Stift (201) und/oder mindestens einen zweiten geschweißten Stift (202) umfasst, wobei der erste geschweißte Stift (210) ein kreisförmiger geschweißter Stift ist und der zweite geschweißte Stift (202) ein abgerundeter rechteckiger geschweißter Stift ist;
die Vielzahl der Durchgangslöcher (11) mindestens ein erstes Durchgangsloch (101) und/oder mindestens ein zweites Durchgangsloch (102) umfasst, wobei das erste Durchgangsloch (101) ein kreisförmiges Durchgangsloch (101) ist und das zweite Durchgangsloch (102) ein abgerundetes rechteckiges Durchgangsloch (102) ist; und
der mindestens einen ersten geschweißten Stift (201) eine Lochschaftpassung in einer Eins-zu-eins-Entsprechung mit dem mindestens ein erstes Durchgangsloch (101) ausbildet, und/oder der mindestens einen zweiten geschweißten Stift (201) eine Lochschaftpassung in einer Eins-zu-eins-Entsprechung mit dem mindestens ein zweites Durchgangsloch (202) ausbildet; und
ferner umfassend eine Entleerungsnut (203), wobei die Entleerungsnut (203) in der Mittelplatte (2) um eine Unterseite des mindestens eines ersten geschweißten Stiftes (201) und/oder des mindestens eines zweiten geschweißten Stiftes (202) herum angeordnet ist, und die Entleerungsnut eine spezifische Tiefe aufweist, um Gas abzuführen und eine Schweißbadtiefe zu erhöhen.

2. Elektronische Vorrichtung nach Anspruch 1, wobei
jeder der Vielzahl von geschweißten Stiften (21) ein abgerundeter rechteckiger geschweißter Stift (21) ist; und
jedes der Vielzahl von Durchgangslöchern (11) ein abgerundetes rechteckiges Durchgangsloch (11) ist.

3. Elektronische Vorrichtung nach Anspruch 1 oder 2, wobei die Mittelplatte (2) eine rechteckige Mittelplatte (2) ist und der mindestens einen ersten geschweißten Stift (201) und/oder der mindestens einen zweiten geschweißten Stift (202) an jeder Seitenlinie der Mittelplatte (2) angeordnet sind/ist.

4. Herstellungsverfahren für einen Mittelrahmen, wobei der Mittelrahmen eine Mittelplatte (2) und eine Einfassung (1) umfasst, und das Verfahren umfasst:
Erhalten (S01) der Mittelplatte (2) durch Verwenden eines Druckgussformprozesses und Anordnen einer Vielzahl von geschweißten Stiften (21) auf der Mittelplatte (2), wobei
die Vielzahl von geschweißten Stiften (21) mindestens einen ersten geschweißten Stift (201) und/oder mindestens einen zweiten geschweißten Stift (202) umfasst, wobei der erste geschweißte Stift (210) ein kreisförmiger geschweißter Stift ist und der zweite geschweißte Stift (202) ein abgerundeter rechteckiger geschweißter Stift ist;
die Vielzahl der Durchgangslöcher (11) mindestens ein erstes Durchgangsloch (101) und/oder mindestens ein zweites Durchgangsloch (102) umfasst, wobei das erste Durchgangsloch (101) ein kreisförmiges Durchgangsloch (101) ist und das zweite Durchgangsloch (102) ein abgerundetes rechteckiges Durchgangsloch (102) ist; und
der mindestens einen ersten geschweißten Stift (201) eine Lochschaftpassung in einer Eins-zu-eins-Entsprechung mit dem mindestens ein erstes Durchgangsloch (101) ausbildet, und/oder der mindestens einen zweiten geschweißten Stift (201) eine Lochschaftpassung in einer Eins-zu-eins-Entsprechung mit dem mindestens ein zweites Durchgangsloch (202) ausbildet;
Ausbilden einer Entleerungsnut (203) in der Mittelplatte (2) um eine Unterseite des mindestens eines ersten geschweißten Stiftes (201) und/oder des mindestens eines zweiten geschweißten Stiftes (202) herum, wobei die Entleerungsnut eine spezifische Tiefe aufweist, um Gas abzuführen und eine Schweißbadtiefe zu erhöhen;
Durchführen (S02) der Filmverarbeitung an der Mittelplatte (2), sodass mindestens die Oberflächen der Vielzahl von geschweißten Stiften (21) raue Oberflächen sind, durch das Durchführen der Filmverarbeitung auf der Mittelplatte (2), sodass mindestens die Oberflächen der Vielzahl von geschweißten Stiften (21) diesen Oberflächenglanz erreichen, der weniger als 20 Gu beträgt;
Durchführen (S1) einer Bearbeitung an einem Aluminiumprofil, um die Einfassung (1) zu erhalten, und Anordnen einer Vielzahl von Durchgangslöchern (11), deren Positionen und Größen denen der Vielzahl von geschweißten Stiften (21) auf der Einfassung (1) entsprechen;
Durchführen (S2) einer Oberflächenbehandlung an der Einfassung (1), sodass mindestens die Oberflächen der Vielzahl von Durchgangslöchern (11) raue Oberflächen sind, durch das Durchführen (S2) des chemischen Schleifens an der Einfassung (1), sodass mindestens die Oberflächenrauheitswerte der Durchgangslochoberflächen von Ra3,2 bis Ra5 betragen;
Montieren (S001) der Einfassung (1) auf der Mittelplatte (2), sodass die Vielzahl von geschweißten Stiften (21) eine Lochschaftpassung in einer Eins-zu-eins-Entsprechung zu der Vielzahl von Durchgangslöchern (11) ausbildet; und
Verbinden (S002) der Einfassung (1) und der Mittelplatte (2) zu einer integrierten Struktur durch Verwenden von Laserschweißen in jedem Passteil des geschweißten Stiftes (21) und des Durchgangslochs (11).

## Revendications

1. Dispositif électronique comprenant un cadre central, dans lequel le cadre central comprend une lunette (1) et une plaque centrale (2) ;
la lunette (1) est disposée autour d'un bord de la plaque centrale (2) ;
une pluralité de montants (21) soudés est disposée sur la plaque centrale (2) ;
une pluralité de trous traversants (11), dont les positions et les tailles correspondent à celles de la pluralité de montants (21) soudés, est disposée sur la lunette (1), et la pluralité de montants (21) soudés forme un arbre à trous s'adaptant en correspondance un à un avec la pluralité de trous traversants (11) ;
des surfaces de la pluralité de montants (21) soudés et des surfaces de la pluralité de trous traversants (11) sont des surfaces rugueuses, dans lequel la surface rugueuse du montant (21) soudé est obtenue par traitement de film et le montant (21) soudé présente une brillance de surface inférieure à 20 Gu, et dans lequel une valeur de rugosité de surface du trou traversant (11) va de 3,2 µm Ra à 5 µm Ra après ponçage chimique ; et
la lunette (1) et la plaque centrale (2) sont reliées par soudage laser dans chaque partie adaptée du montant (21) soudé et du trou traversant (11) ; dans lequel
la pluralité de montants (21) soudés comprend au moins un premier montant (201) soudé et/ou au moins un second montant (202) soudé, le premier montant (210) soudé est un montant soudé circulaire, et le second montant (202) soudé est un montant soudé rectangulaire arrondi ;
la pluralité de trous traversants (11) comprend au moins un premier trou traversant (101) et/ou au moins un second trou traversant (102), le premier trou traversant (101) est un trou traversant circulaire (101), et le second trou traversant (102) est un trou traversant (102) rectangulaire arrondi ; et
l'au moins un premier montant (201) soudé forme un arbre à trou adapté en correspondance un à un avec l'au moins un premier trou traversant (101), et/ou l'au moins un second montant (201) soudé forme un arbre à trou adapté en correspondance un à un avec l'au moins un second trou traversant (202) ; et
comprenant en outre une rainure d'échappement (203), dans laquelle la rainure d'échappement (203) est ménagée dans la plaque centrale (2) autour d'un fond de l'au moins un premier montant (201) soudé et/ou de l'au moins un second montant (202) soudé, la rainure d'échappement présentant une profondeur spécifique pour l'évacuation de gaz et l'augmentation d'une profondeur de bain de soudure.

2. Dispositif électronique selon la revendication 1, dans lequel
chacun de la pluralité de montants (21) soudés est un montant (21) soudé rectangulaire arrondi ; et
chacun de la pluralité de trous traversants (11) est un trou traversant (11) rectangulaire arrondi.

3. Dispositif électronique selon la revendication 1 ou 2, dans lequel la plaque centrale (2) est une plaque centrale rectangulaire (2), et l'au moins un premier montant (201) soudé et/ou l'au moins un second montant (202) soudé sont disposés sur chaque ligne latérale de la plaque centrale (2).

4. Procédé de fabrication d'un cadre central, dans lequel le cadre central comprend une plaque centrale (2) et une lunette (1), et le procédé comprend :
l'obtention (S01) de la plaque centrale (2) par un processus de moulage par coulée, et la disposition d'une pluralité de montants (21) soudés sur la plaque centrale (2), dans lequel
la pluralité de montants (21) soudés comprend au moins un premier montant (201) soudé et/ou au moins un second montant (202) soudé, le premier montant (210) soudé est un montant soudé circulaire, et le second montant (202) soudé est un montant soudé rectangulaire arrondi ;
la pluralité de trous traversants (11) comprend au moins un premier trou traversant (101) et/ou au moins un second trou traversant (102), le premier trou traversant (101) est un trou traversant circulaire (101), et le second trou traversant (102) est un trou traversant (102) rectangulaire arrondi ; et
l'au moins un premier montant (201) soudé forme un arbre à trou adapté en correspondance un à un avec l'au moins un premier trou traversant (101), et/ou l'au moins un second montant (201) soudé forme un arbre à trou adapté en correspondance un à un avec l'au moins un second trou traversant (202) ;
la formation d'une rainure d'échappement (203) dans la plaque centrale (2) autour d'un fond de l'au moins un premier montant (201) soudé et/ou de l'au moins un second montant (202) soudé, la rainure d'échappement présentant une profondeur spécifique pour l'évacuation de gaz et l'augmentation d'une profondeur de bain de soudure ;
la réalisation (S02) d'un traitement de film sur la plaque centrale (2) de sorte qu'au moins des surfaces de la pluralité de montants (21) soudés soient des surfaces rugueuses grâce à la réalisation d'un traitement de film sur la plaque centrale (2), de sorte qu'au moins des surfaces de la pluralité de montants (21) soudés répondent au fait que la brillance de surface est inférieure à 20 Gu ;
la réalisation (S1) d'un usinage sur un profilé d'aluminium pour obtenir la lunette (1), et la disposition sur la lunette (1) d'une pluralité de trous traversants (11) dont les positions et les dimensions correspondent à celles de la pluralité de montants (21) soudés ;
la réalisation (S2) d'un traitement de surface sur la lunette (1), de sorte qu'au moins des surfaces de la pluralité de trous traversants (11) soient des surfaces rugueuses grâce à la réalisation (S2) d'un ponçage chimique sur la lunette (1), de sorte qu'au moins des valeurs de rugosité de surface des surfaces des trous traversants soient comprises entre 3,2 µm Ra et 5 µm Ra ;
le montage (S001) de la lunette (1) sur la plaque centrale (2), de sorte que la pluralité de montants (21) soudés forme un arbre à trou s'adaptant en correspondance un à un avec la pluralité de trous traversants (11) ; et
la liaison (S002) de la lunette (1) et de la plaque centrale (2) en une structure intégrée par soudage laser dans chaque partie adaptée du montant (21) soudé et du trou traversant (11).
